# EUROPEAN PATENT SPECIFICATION

(11) **EP 2 156 721 B1**
(45) Date of publication and mention of the grant of the patent: **26.10.2011**
(21) Application number: 09178173.2
(22) Date of filing: 23.07.2008
(51) Int. Cl.: A01B 33/02

(54) **Walking type electric cultivating machine**
Handgeführte elektrische Bodenbearbeitungsmaschine
Machine de culture électrique guidée à la main

(30) Priority: 24.07.2007 JP 2007191643; 13.11.2007 JP 2007294103
(43) Date of publication of application: 24.02.2010
(62) Divisional of application: 08160943.0
(73) Proprietor: Yanmar Co. Ltd., Osaka-shi, Osaka 530-0013 (JP)
(72) Inventor: Tsuchiya, Taku, Osaka-shi Osaka 530-0013 (JP)
(74) Representative: Peckmann, Ralf

(56) References cited:
- DE-A1- 4 210 816
- FR-A1- 2 689 363
- JP-A- 2005 341 802
- US-A- 4 640 366

## Description

### BACKGROUND OF THE INVENTION

### Field of the Invention

This invention relates to a walking type electronic cultivating machine (or plough) including an electrically-operated cultivating shaft portion.

### Related Art

There has been proposed a walking type cultivating machine including a machine main body, a cultivating shaft unit supported by the machine main body so as to be positioned below the machine main body, and a resistance rod provided posterior to the cultivating shaft unit, wherein the resistance rod is configured so as to be detachably connected to a resistance rod attaching section provided in the machine main body, and traveling wheels capable of being detachably connected to the resistance rod attaching section and the resistance rod are selectively attached to the resistance rod attaching section in order to facilitate the mobility of the machine on the road and the like (for example, see Japanese Unexamined Patent Publications Nos. 2005-341802 and 2006-158318, which are hereinafter referred to respectively as Patent Documents 1 and 2).

The walking type cultivating machine disclosed in Patent Documents 1 and 2 makes it possible to enhance the mobility of the machine on the road and the like by alternatively attaching the traveling wheels to the resistance rod attaching section to which the resistance rod is attached at the time when the machine is in a cultivating operation. However, in the cultivating machine disclosed in Patent Documents 1 and 2, it is necessary to remove the resistance rod from the resistance rod attaching section and then attach the traveling wheels to the resistance rod attaching section in order to change the condition of the cultivating machine from a cultivating condition in which the resistance rod is attached to the resistance rod attaching section to a moving condition in which the traveling wheels are attached to the resistance rod attaching section. Thus, the cultivating machine involves troublesome work in changing between the cultivating condition and the moving condition.

Further, when moving the walking type cultivating machines disclosed in Patent Documents 1 and 2 on the road or the like, it is necessary for an operator to bring the traveling wheels, which is attached to the machine mind body after the removal of the resistance rod, into contact with the ground while lifting the cultivating shaft unit upward by pushing downward a grip portion that is provided in the machine main body so as to be positioned upward and rearward than the cultivating shaft unit.

Accordingly, in the walking type cultivating machines disclosed in Patent Documents 1 and 2, the operator has to bend over at the time when the machine is in a moving operation on the road or the like in comparison to the time when the machine is in the cultivating operation.

In order to facilitate the mobility on the road or the like while making it possible to dissolve the troublesome work of detaching and attaching the resistance rod and the traveling wheels, there has been proposed a walking type cultivating machine including a machine main body, a cultivating shaft unit, and a rotating frame supported by a machine frame on a rear side of the cultivating shaft unit in a state of being pivotable around a rotational shaft along a front-back direction of the machine, the rotating frame including first and second ends to which a resistance rod and traveling wheels are respectively attached (for example, see the Japanese Unexamined Patent Publication No, H08-224001, which is hereinafter referred to as Patent Document 3).

Specifically, the walking type cultivating machine disclosed in Patent Document 3 is configured so as to fix the rotating frame in such a working position that the first end to which the resistance rod is attached is positioned on a lower side when the machine is in the cultivating operation, and to fix the rotating frame in such a moving position that the second end to which the traveling wheels are attached is positioned on the lower side when the machine is in the moving operation.

Although the cultivating machine disclosed in Patent Document 3 makes it possible to change a condition of the machine between the cultivating condition and the moving condition easier than the cultivating machines disclosed in Patent Documents 1 and 2 in which the resistance rod and the traveling wheels have to be attached and detached in changing the condition of the machine, it necessitates a change of a position
Further, the cultivating machine disclosed in Patent Document 3 has the same disadvantage as the cultivating machines disclosed in Patent Documents 1 and 2 in that the operator has to bend over when the machine is in the moving operation on the road or the like.

There has been existed a walking type electric cultivating machine including a cultivating unit in which an electric motor driven by a battery is mounted therein (for example, see Japanese Unexamined Patent Publication No. H05-336801, which is hereinafter referred to as Patent Document 4).

More specifically, the walking type electric cultivating machine in Patent Document 4 includes a machine main body, the cultivating unit that includes the electric motor, a cultivating shaft and a cultivating rotary, traveling wheels supported by the machine main body so as to be positioned rearward than the cultivating unit, a grip portion supported by the machine main body so as to be positioned upward and rearward than the traveling wheels, and the battery that drives the electric motor, wherein the battery, which is a heavy component, is mounted on the traveling wheels.

In the thus configured cultivating machine disclosed in Patent Document 4, the center of gravity stays on the traveling wheels even when the machine is in the cultivating operation. Therefore, it becomes necessary to lift the grip portion upward in order to place the load on the cultivating unit so that the cultivating efficiency is increased, which unfavorably increases the operator's labor.
Document JP 2005 341802 A discloses a walking type electric cultivating machine according to the preamble of claim 1.

### SUMMARY OF THE INVENTION

The present invention has been accomplished in view of the conventional techniques, and it is a first object of the present invention to provide a walking type electric cultivating machine capable of changing the condition of the machine between the cultivating condition and the moving condition without detaching and attaching the resistance rod and the traveling wheels, and changing the positions thereof, while having a simple structure.
It is another object of the present invention to provide a walking type electric cultivating machine that the operator could move on the road or the like without bending over, while achieving the first object.
Further, it is a second object of the present invention to provide a walking type electric cultivating machine capable of increasing the cultivating efficiency while reducing the operator's labor.

The present invention provides a cultivating machine as defined in claim 1.
In order to achieve the first object, a walking type electric cultivating machine including a machine main body that has a support frame extending in an up-and-down direction, and an electrically-operated cultivating shaft unit supported by the machine main body so as to be positioned downward than the machine main body, the cultivating machine being characterized of further including a resistance rod supported by the support frame so as to be positioned rearward than the cultivating shaft unit, and traveling wheels supported by the machine main body so as to be positioned forward than the cultivating shaft unit and have a rotational-axis line positioned upper than a rotational-axis line of the cultivating shaft unit.

According to the cultivating machine, it is possible to perform a change-over between a cultivating position in which the cultivating shaft unit is brought into contact with the ground and a moving position in which the traveling wheels are brought into contact with the ground without attaching and detaching work of the resistance rod and the traveling wheels and without position-changing work thereof, since both the traveling wheels and the resistance rod are constantly provided. It is also possible to effectively prevent the traveling wheels from being brought into contact with the ground when the cultivating machine is in a cultivating operation, since the resistance rod is positioned on a rear side of the cultivating shaft unit, and the traveling wheels are positioned upward than the rotational-axis line of the cultivating shaft unit on a side opposite to the resistance rod as the cultivating shaft unit as a reference. That is, the cultivating machine according to the present invention allows the operator to cultivate the ground with less attention given to possible contact of the traveling wheels with the ground in spite of the fact that the traveling wheels are constantly provided, thereby allowing the operator to cultivate the ground without taking uncomfortable body position.

A lowermost point of the traveling wheels is positioned upper than the rotational-axis line of the cultivating shaft unit in a state where the cultivating machine is in a cultivating position in which the cultivating shaft unit is brought into contact with the ground.
According to the configuration, it is possible to more effectively prevent the traveling wheels from being brought into contact with the ground when the cultivating machine is in the cultivating operation.
Therefore, even if there is an unsolid area such as a muddy area in a working field, the operator could cultivate the working field with the cultivating machine without taking an uncomfortable body position or a forced body position. Further, since it is effectively prevented that mud or the like is attached to the traveling wheels during the cultivating operation, it can be also prevented that the road on which the machine is moved with the traveling wheels is gotten dirty by mud.

Preferably, the support frame is inclined in such a front-low/rear-high manner that is positioned rearward as it advances upward in a state where the cultivating machine is in the cultivating position, and the cultivating machines is shifted from the cultivating position to a moving position in which the traveling wheels are brought into contact with the ground and the cultivating shaft unit is lifted upward from the ground by pivoting the support frame in such a direction that an upper side of the support frame is shifted forward until the support frame is inclined in such a front-high/rear-low manner that is positioned forward as it advances upward in the cultivating machine is in the cultivating position.

The configuration makes it possible to position a grip, which is provided at the upper end of the support frame, upward at the time when the cultivating machine is in the moving position in comparison with a cultivating machine including traveling wheels positioned rearward than a cultivating shaft unit, thereby allowing the operator to move the cultivating machine without taking a uncomfortable body position such as a bending-over position.

In order to achieve the second object, a walking type electric cultivating machine including a cultivating shaft unit in which an electric motor driven by the battery is mounted and which is disposed along a width direction of the machine, the cultivating machine being characterized of further including a cultivating frame that includes a pair of left and right cultivating support pipes having upper ends directly or indirectly coupled with each other and lower ends sandwiching both ends of the cultivating shaft unit in the width direction of the machine, a handle frame having a lower end coupled with an upper end of the cultivating frame at the center in the width direction of the machine and an upper end to which a handle unit is attached, a battery case connected to the cultivating frame and the handle frame so as to surround a coupling section where the cultivating frame and the handle frame are coupled with each, the handle frame being inclined in such a front-low/rear-high manner that is positioned rearward as it advances from the lower end toward the upper in a state where the cultivating machine is in a cultivating position in which the cultivating shaft unit is brought into contact with the ground, the battery case being provided with a battery accommodating portion in which the battery is accommodated in such a manner that the battery overlaps with the cultivating shaft unit as viewed from the above in a state where the cultivating machine is in the cultivating position, and traveling wheels positioned forward and downward than the battery accommodating portion in a state where the cultivating machine is in the cultivating position.

According to the configuration, since a weight of the battery, which is a heavy component, directly acts on the cultivating shaft unit in the a state where the machine is in the cultivating position, it is possible to effectively place the center of gravity of the cultivating machine in the cultivating position on the cultivating shaft unit, thereby smoothly applying the load to the cultivating shaft unit 4B to enhance workability of the cultivating operation while reducing the operator's labor.

The battery accommodating portion, the traveling wheels and the cultivating shaft unit are arranged so that the battery accommodated in the battery accommodating portion overlaps with a rotational-axis line of the traveling wheels as viewed from the above in a state where the cultivating machine is in a moving position in which the traveling wheels are brought into contact with the ground and the cultivating shaft unit is lifted upward from the ground.

According to the configuration, the weight of the battery, which is a heavy component, is placed above the traveling wheels when the cultivating machine is shifted from the cultivating position to the moving position in which the traveling wheels are brought into contact with the ground and the cultivating shaft unit is lifted upward from the ground by pivoting the whole cultivating machine in a forward direction via the handle unit. Therefore, it is possible to move the cultivating machine with the traveling wheels receiving the weight of the battery without keeping the cultivating machine in an unnatural position.

The battery accommodating portion has an opening that is opened rearward so that the battery can be inserted in and removed from the battery accommodating portion from the rearward of the cultivating machine.
According to the configuration, since the opening of the battery accommodating portion faces the operation positioning on the rear side of the cultivating machine when performing the cultivating operation, the operator could easily confirm whether or not the battery is mounted and rapidly perform a replacement of the battery.

More preferably, the pair of left and right cultivating support pipes include parallel portions extending upward from lower ends which support the cultivating shaft unit so as to be substantially in parallel with each other, and inclined portions extending forward and inward in the width direction of the cultivating machine from upper ends of the parallel portions and having upper ends directly or indirectly coupled to each other. The cultivating frame further includes a reinforcing pipe that couples between the pair of left and right cultivating support pipes, and the battery accommodating portion extends in the lengthwise direction of the cultivating machine with passing through a space surrounded by the pair of left and right cultivating support pipes, the reinforcing pipe and the handle frame.

According to the configuration, when the battery is housed in the battery accommodating portion, the handle frame is positioned above the battery, the pair of let and right cultivating support pipes are respectively positioned on the both sides of the battery, and the reinforcing pipe coupling between the pair of let and right cultivating support pipes is positioned below the battery. Therefore, it is possible to effectively protect the battery from the outside while placing the battery respectively on the cultivating shaft unit and the traveling wheels when the cultivating machine is in the cultivating position and the traveling wheels.

Preferably, the cultivating machine further includes a resistance rod connected to the reinforcing pipe.
According to the configuration, it is possible to increase the strength of the resistance rod.

### BRIEF DESCRIPTION OF THE DRAWINGS

The above, and other objects, features and advantages of the present invention will become apparent from the detailed description thereof in conjunction with the accompanying drawings wherein.
Fig. 1 is a perspective view of a walking type electric cultivating machine according to a first embodiment of the present invention in a state of being in a cultivating position.
Fig. 2 is a left side view of the walking type electric cultivating according to the first embodiment.
Fig. 3 is a partial cross-sectional view of the cultivating machine according to the first embodiment.
Fig. 4 is a perspective view of the cultivating machine according to the first embodiment in a state of being a moving position.
Fig. 5 is a left-side view of the cultivating machine according to the first embodiment, and shows the moving position and the cultivating position by a solid line and a broken line, respectively.
Fig. 6 is a left side view of a walking type electric cultivating machine according to a second embodiment of the present invention in a state of being in the cultivating position.
Fig. 7 is a perspective view of the walking type electric cultivating machine according to the second embodiment in a state of being in the cultivating position.
Fig. 8 is plan view for showing an internal structure of a handle unit in the walking type electric cultivating machine according to the second embodiment.
Fig. 9 is a partial rear perspective view of the cultivating machine according to the second embodiment.
Fig. 10 is an exploded perspective view of the cultivating machine according to the second embodiment.
Fig. 11 is a left side view of the cultivating machine according to the second embodiment in a state of being the moving position.
Fig. 12 is a left side view of the cultivating machine according to the second embodiment in a state of being in a first storage position.
Fig. 13 is a left side view of the cultivating machine according to the second embodiment in a state of being a second storage position.
Fig. 14 is a left perspective view of the cultivating machine according to the second embodiment in a state of being the second storage position.

### DETAILED DESCRIPTION OF THE PREFERRED EMBODIMENTS

### First embodiment

Hereinafter, a walking type electric cultivating machine according to a first embodiment of the present invention will be explained, with reference to the attached drawings.

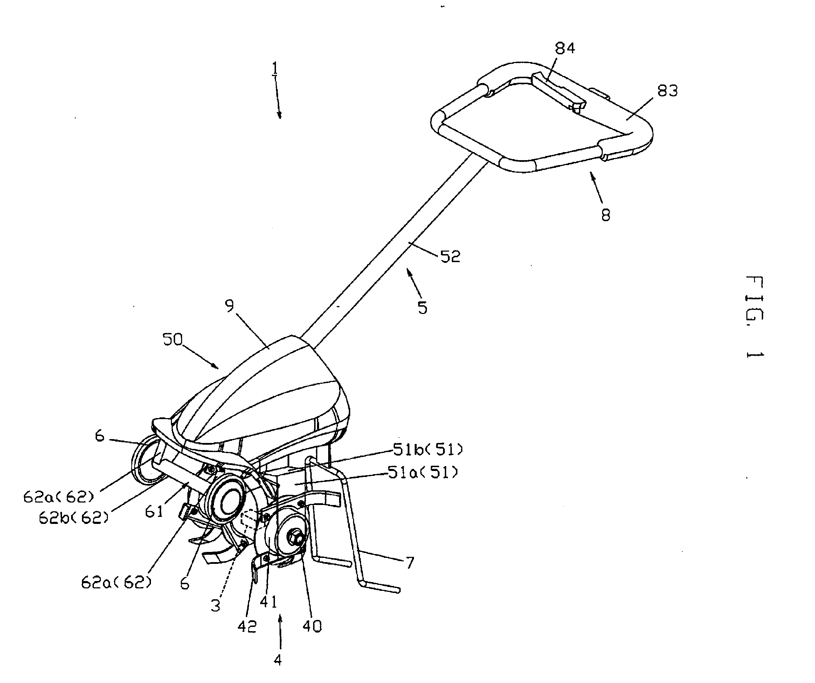

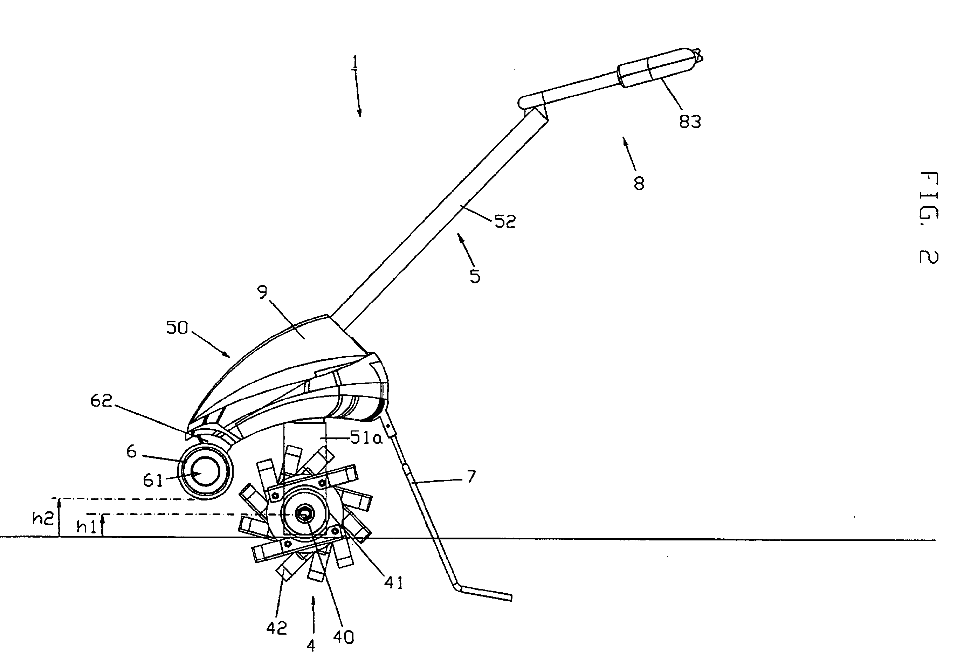

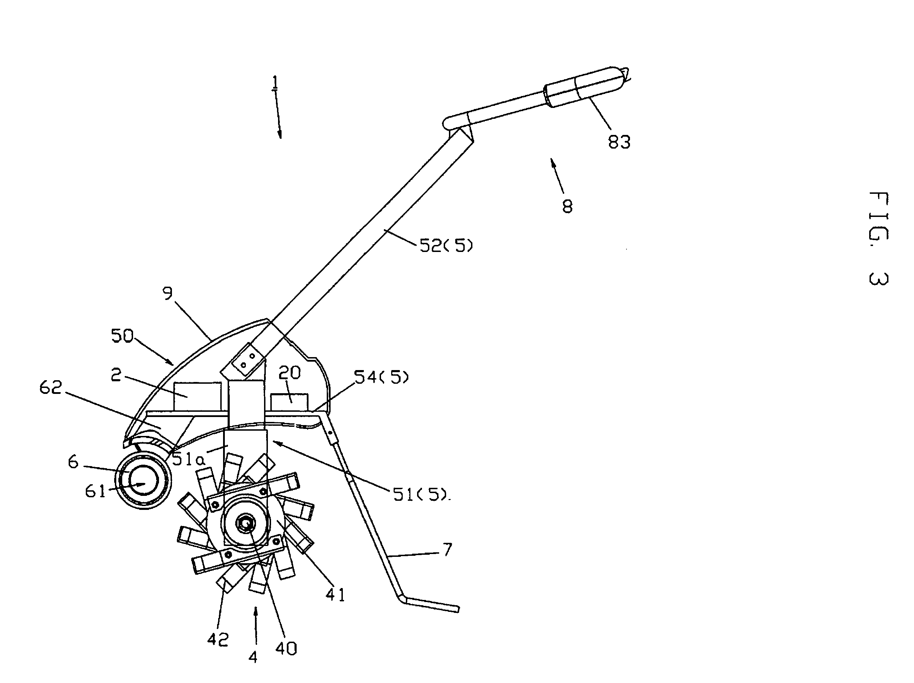

Figs. 1 and 2 are respectively a perspective view and a left side view of the walking type electric cultivating machine 1 according to the present embodiment. Fig. 3 is a partial cross-sectional view of the cultivating machine 1 shown in Figs. 1 and 2. In the present embodiment, terms used to express directions such as rear, front, right, and left are all based on a direction where the cultivating machine 1 advances forward, unless particularly stated otherwise.

The cultivating machine 1 according to the present embodiment includes a machine main body 50 provided with a support frame 5 extending in an up-and-down direction, and an electrically-operated cultivating shaft unit 4 supported by the machine main body 50 so as to be positioned downward than the machine main body 50 as shown in Figs. 1 and 2.

In the present embodiment, the support frame 5 includes a base frame 54 extending in a lengthwise direction of the machine 1, a handle frame 52 extending upward and rearward from the base frame 54, and a cultivating shaft frame 51 extending downward from the base frame 54, as shown in Figs. 1 to 3.

The cultivating shaft frame 51 includes a pair of left and right up-and-down-extending pieces 51a which support both ends of a cultivating shaft 40 of the cultivating shaft unit 4, and a left-and-right-extending piece 51b which connects upper ends of the pair of left and right up-and-down-extending pieces 51a. The cultivating shaft frame 51 is formed in a portal shape as viewed from the front (or in a front view).

Further, the cultivating machine 1 according to the present embodiment includes a resistance rod 7 supported by the support frame 5 so as to be positioned rearward than the cultivating shaft unit 4, and a pair of left and right traveling wheels 6 supported by the support frame 5 so as to be positioned forward than the cultivating shaft unit 4 and have a rotational-axis line positioned upward than a rotational-axis line of the cultivating shaft unit 4 (rotational-axis line of the cultivating shaft 40) in a state where the machine is in the a cultivating position in which the cultivating shaft unit 4 is brought into contact with the ground. The pair of left and right traveling wheels 6 are coupled with each other via an axle shaft 61 along a width direction of the machine body.

In the present embodiment, the resistance rod 7 is mounted to a rear end of the base frame 54 in a detachable manner.

The traveling wheels 6 are supported by the support frame 5 via an attaching member 62.
More specifically, as shown in Figs. 1 and 2, the attaching member 62 includes a pair of left and right support pieces 62a fixedly attached to a lower surface of the base frame 54 at a front part thereof, and a hollow shaft tube 62b fixedly provided between the pair of left and right support pieces 62a along the width direction of the machine body.
The traveling wheels 6 are fixedly attached to both ends of the axle shaft 61 that is inserted into the shaft tube 62b and thereby supported by the base frame 54 via the axle shaft 61 and the attaching member 62.

The cultivating shaft unit 4 includes the cultivating shaft 40, a cylindrical barrel portion 41 externally mounted around the cultivating shaft 40, a driving portion 3 placed inside the cylindrical barrel portion 41 and provided with an electric motor (not shown) which rotates the cultivating shaft 40, and cultivating claws 42 which are non-rotatable relative to the cultivating shaft 40 to cultivate the ground as the cultivating shaft 40 is rotated.
The driving portion 3 includes a reduction mechanism (not shown) which reduces rotational speed of a driving power outputted from the electric motor.

The cultivating machine 1 further includes a battery 2 that is provided on an upper surface of the base frame 54 and that drives the electric motor, a controller 20 that is provided on the upper surface of the base frame 54 and that controls an output of the driving portion 3, and a battery case 9 attached to the support frame 5 so as to surround the battery 2 and the controller 20.

The cultivating machine 1 includes a handle unit 8 coupled with an upper end of the handle frame 52.
The handle unit 8 includes a grip portion 83 to be held by an operator, and an operation lever 84 that is capable of being manually operated to control the output of the driving portion 3 via the controller 20.

As described earlier, in the cultivating machine 1 according to the present embodiment, the traveling wheels 6 are supported by the support frame 5 of the machine main body 50 (more specifically, the base frame 54) so as to be positioned on a side opposite to the resistance rod 7 in the front-back direction of the machine with the cultivating shaft 4 as a reference and so as to have the rotational-axis line positioned upward than the cultivating shaft 40 forming the rotational-axis line of the cultivating shaft unit 40 in a state where the machine is in the cultivating position.

More specifically, the cultivating machine 1, as shown in Fig. 2, is configured so as to take the cultivating position in which a portion lower than the cultivating shaft 40 in the cultivating shaft unit 4 and a free end of the resistance rod 7 thrust into the ground in the state where the rotational-axis line of the traveling wheels 6 is positioned upper than the rotational-axis line of the cultivating shaft 40. Therefore, by setting the cultivating machine 1 in the cultivating position, the cultivating claws 42 rotated by the cultivating shaft 40 cultivate the ground.

As described above, the cultivating machine 1 is configured so that the traveling wheels 6 are positioned upper than the cultivating shaft 4 in a state where the machine is in the cultivating position, thereby providing an enhanced workability to the operator in spite of a fact that the traveling wheels 6 are constantly mounted therein.
More specifically, according to the described constitution, the traveling wheels 6 are prevented from being brought into contact with the ground as much as possible when the machine 1 is in the cultivating operation. Therefore, when cultivating the ground with the cultivating machine 1, the operator need not be so cautious that the traveling wheels 6 are prevented from contacting the ground, whereby the operator could cultivate the ground with the cultivating machine 1 without taking any physically-taxing posture.

As shown in Fig. 2, the traveling wheels 6 and the cultivating shaft unit 4 are preferably arranged so that a lowermost point of the traveling wheels 6 (a horizontal line h2 passing through the lowermost point) is positioned upper than the rotational-axis line of the cultivating shaft unit 4 (a horizontal line h1 passing through the rotational-axis line of the cultivating shaft 40) in a state where the machine is in the cultivating position.
According to the constitution, the traveling wheels 6 can be effectively prevented from being brought into contact with the ground even though the portion of the cultivating shaft unit 4 lower than the cultivating shaft 40 thrusts into the ground when the machine is in the cultivating operation.

Therefore, even if there is an unsolid area such as a muddy area in a working field, it is possible to perform the cultivating operation while effectively preventing the traveling wheels 6 from being grounded, in a state where the machine 1 is in the cultivating position without taking the machine 1 in a forced position in which the traveling wheels 6 are forcibly lifted upward. Further, since it is effectively prevented that mud or the like is attached to the traveling wheels 6 during the cultivating operation, it can be also prevented that the road on which the machine 1 is moved with the traveling wheels 6 is gotten dirty by mud.

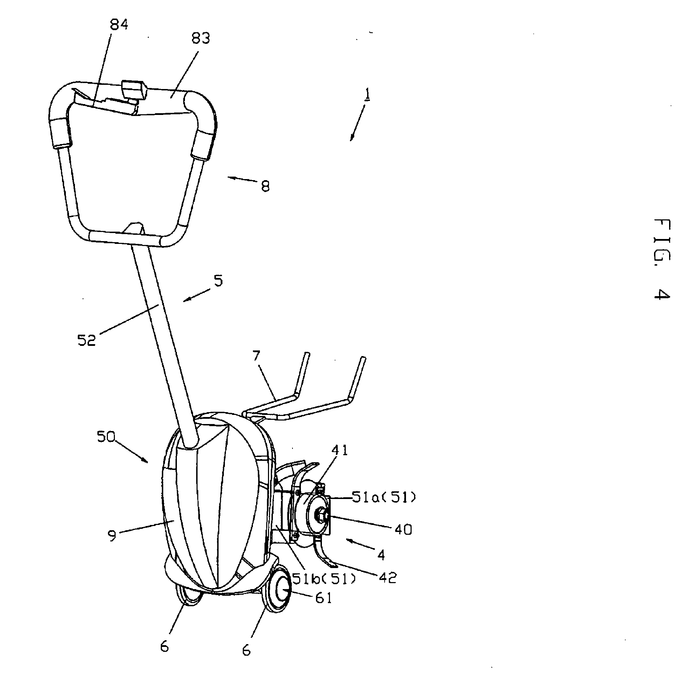

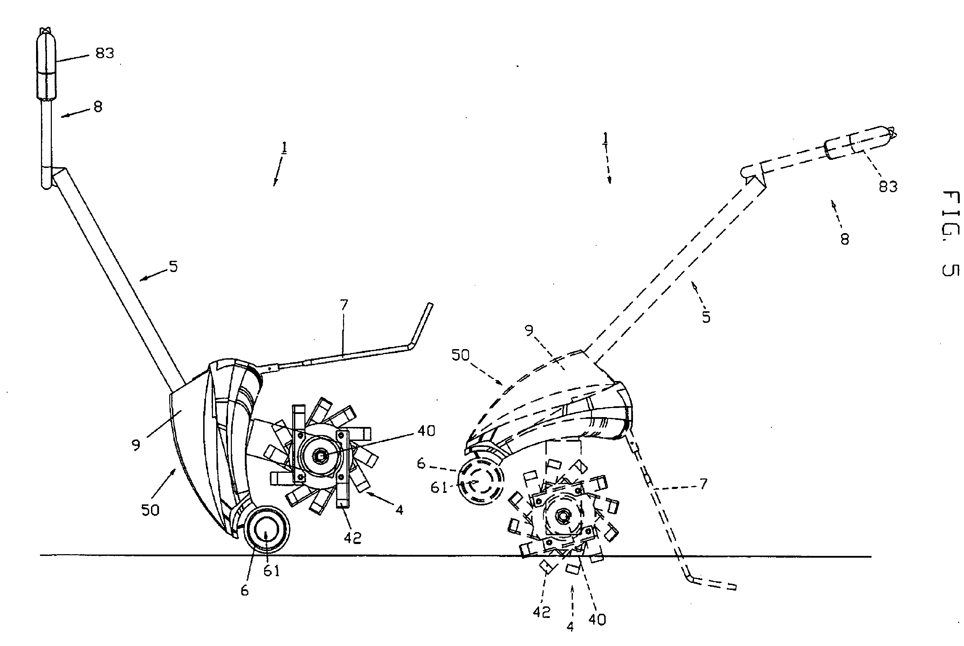

Fig. 4 is a perspective view of the cultivating machine 1 in a moving position. Fig. 5 is a left-side view of the cultivating machine 1. In Fig. 5, the moving position and the cultivating position of the cultivating machine 1 are respectively shown by a solid line and a broken line.

The cultivating machine 1 is configured to take the moving position by pivoting the support frame 5 so that the traveling wheels 6 are brought into contact with the ground and the cultivating shaft unit 4 is lifted upward from the ground, from the cultivating position in which the cultivating shaft unit 4 is brought into contact with the ground and the traveling wheels 6 are positioned upward from the ground.

More specifically, when the handle frame 52 is pivoted around the cultivating shaft 40 of the cultivating shaft unit 4 so that an upper side thereof is positioned forward than the cultivating shaft 40 in the lengthwise direction of the machine, the traveling wheels 6 are brought into contact with the ground. When the handle frame 52 is further pivoted from this state around the axle shaft 60 of the traveling wheels 6 so that the upper side thereof is positioned forward, the cultivating shaft unit 4 is lifted up from the ground, and the cultivating machine 1 takes the moving position capable of being moved on the road with the traveling wheels 6.

In the present embodiment, as shown in Figs. 1 and 2, the handle frame 52 is inclined in such a front-low/rear-high manner that is positioned rearward as it advances upward with the cultivating position as a reference.
More specifically, the handle frame 52 is coupled at its lower end with an upper end of the cultivating shaft frame 51 in a state of being inclined relative to the base frame 54 (which is substantially horizontal in the cultivating position of the machine) so that it is positioned rearward as it advances from the lower end to an upper end with the cultivating position of the machine as a reference.

By pivoting the handle frame 52, which is inclined in the front-low/rear-high manner, so that its upper side shifts forward until the handle frame 52 is inclined in such a front-high/rear-low manner that is positioned forward as it advances from its lower end to its upper end, the cultivating machine 1 takes the moving position in which the cultivating shaft unit 4 is lifted upward from the ground with the traveling wheels 6 being brought into contact with the ground, as shown in Figs. 4 and 5.

In the present embodiment, by pivoting the support frame 5, via the grip portion 83 of the handle unit 8 provided in an upper end of the support frame 5, in such a direction that the upper side of the support frame 5 (that is the upper side of the handle frame 52) is shifted in the forward direction until the base frame 54 is substantially perpendicular, the cultivating machine 1 takes the moving position capable of being moved on the road with the traveling wheels 6.

In the present embodiment, the support frame 5 is configured so that the height of the grip 83 of the handle unit 8 provided in the upper end of the support frame 5 (the upper end of the handle frame 52) measured from the ground is substantially the same in the cultivating position (shown by the broken line in Fig. 5) and the moving position (shown by the solid line in Fig. 5).

The configuration makes it possible that the operator operates the cultivating machine 1 without taking any physically-taxing posture in either of the cultivating position or the moving position, thereby effectively reducing the operator's labor.

As described above, the cultivating machine 1 according to the present embodiment includes the machine main body 50 provided with the support frame 5 extending in an up-and-down direction, the cultivating shaft unit 4 electrically driven and supported by the machine main body 50 so as to be positioned below the machine main body 50, the resistance rod 7 supported by the support frame 5 so as to be positioned rearward than the cultivating shaft unit 4, and the traveling wheels 6 supported by the machine main body 50 so as to be positioned forward than the cultivating shaft unit 4 and have the rotational-axis line positioned upward than the rotational-axis line of the cultivating shaft unit 4 in a state where the machine 1 is in the cultivating position. Therefore, the cultivating machine 1 can perform the cultivating operation and the moving operation without attaching/detaching work of the traveling wheels 6 and the resistance rod 7 and work for changing the positions of these members.

Further, according to the cultivating machine 1, the traveling wheels 6 can be prevented from interfering with the cultivating operation, thereby easily performing the cultivating operation in the state where the cultivating machine 1 is in the cultivating position.

Further, according to the cultivating machine 1, it is unnecessary to provide any structure required for selectively attaching and detaching the traveling wheels 6 and the resistance rod 7 and changing the positions of these members, thereby achieving the above described effects without the increase of manufacturing costs.

Furthermore, in the cultivating machine 1, the handle frame 52 of the support frame 5 is inclined in the front-low/rear-high manner, and the traveling wheels 6 is positioned upward and forward than the cultivating shaft unit 4 with the cultivating position as a reference. Therefore, the operator need not bend over when moving the cultivating machine 1 on the road with the traveling wheels 6 contacting the ground, thereby moving the cultivating machine 1 without taking any physically uncomfortable posture.

More specifically, in a cultivating machine in which traveling wheels are positioned rearward than a cultivating shaft unit, it is necessary to place the handle unit provided at the upper end of the handle frame at a position lower than that of the cultivating position in which the cultivating shaft unit is brought into contact with the ground in order to ground the traveling wheels. In other words, the operator has to take such a bend-over posture that the grip portion is positioned lower than that of the cultivating operation in order to move the cultivating machine with the traveling wheels.

On the other hand, in the present embodiment, as described earlier, the handle frame 52 provided with the handle unit 8 at the upper end thereof is inclined in the front-low/rear-high manner and the traveling wheels 6 are positioned anterior to the cultivating shaft unit 4 in a state where the machine 1 is in the cultivating position.

According to the configuration, the traveling wheels 6 can be brought into contact with the ground by pivoting the handle frame 52 around the cultivating shaft unit 4 in such a direction that the handle unit 8 shifts forward. Therefore, the operator can move the cultivating machine 1 without taking the bend-over posture.

In the present embodiment, although the driving unit 3 including the electric motor which rotates the cultivating shaft 40 is provided in the cylindrical barrel portion 41 of the cultivating shaft unit 4, the present invention is not limited thereto. For example, the driving unit 3 may be provided in the machine main body 50 (battery case 9).
Further, the structure and the shape of the support frame 5 is not limited to the embodiment shown in the drawings and can be variously modified in the present invention.

### Second embodiment

Hereinafter, a walking type electric cultivating machine according to a second embodiment of the present invention will be explained, with reference to the attached drawings.

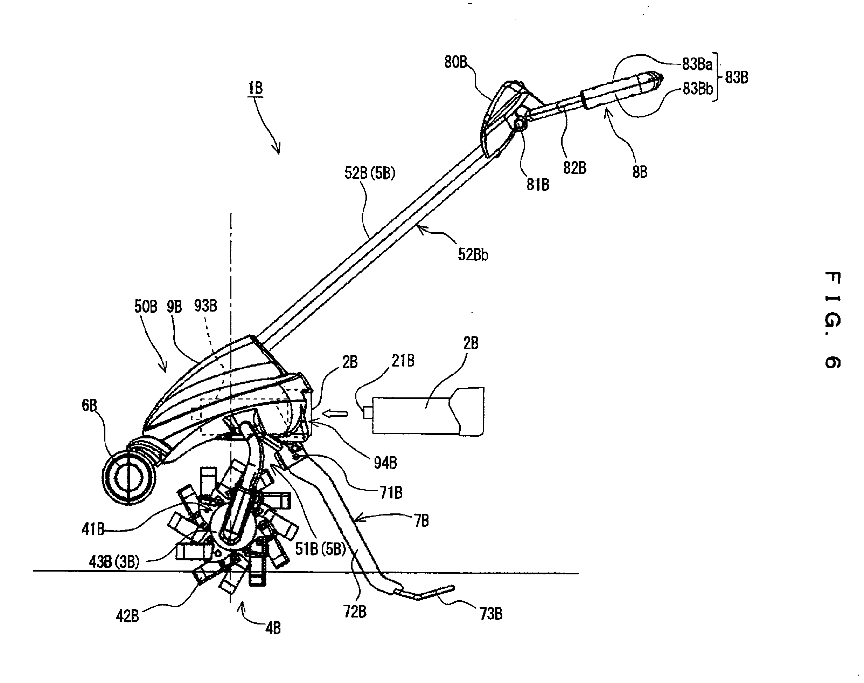

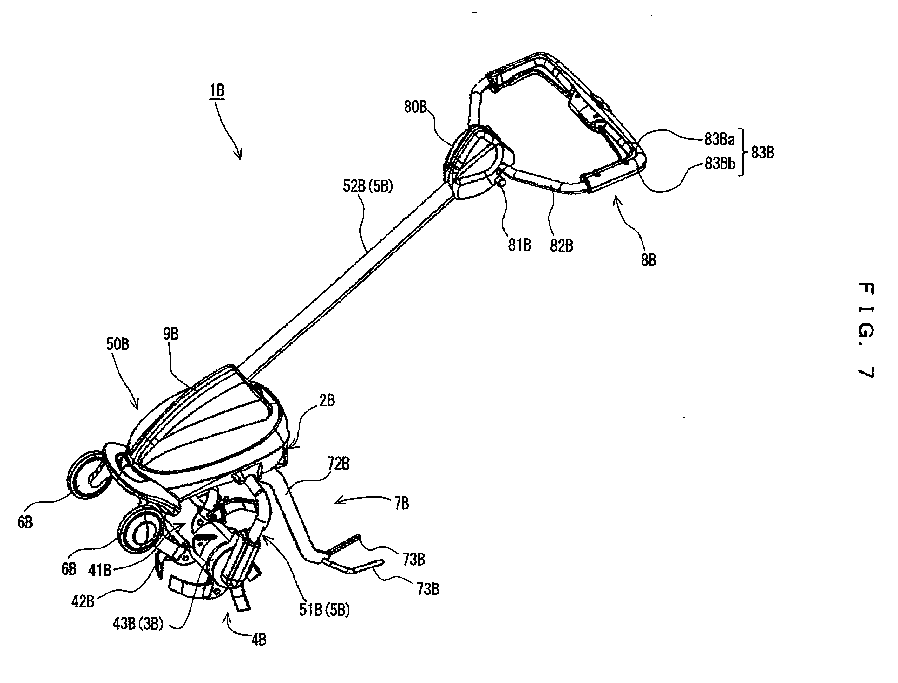

Figs. 6 and 7 are respectively a left-side view and a perspective view of a walking type electric cultivating machine 1B according to the present embodiment, in a state where the cultivating machine 1B is in the cultivating position.

As shown in Figs. 6 and 7, the cultivating machine 1B includes a machine main body 50B, a battery 2B mounted in the machine main body 50B, and a cultivating shaft unit 4B in which an electric motor 3B driven by the battery 2B is mounted and which is supported by the machine main body 50B so as to be along a width direction of the machine body.

The machine main body 50B includes a support frame 5B and a battery case 9B.
The support frame 5B includes a cultivating frame 51B which supports the cultivating shaft unit 4B, and a handle frame 52B inclined in such a front-low/rear-high manner that is positioned rearward as it advances from a lower end toward an upper end (that is, as a distance to the upper end is decreased) in a state where the cultivating machine 1B is in the cultivating position.

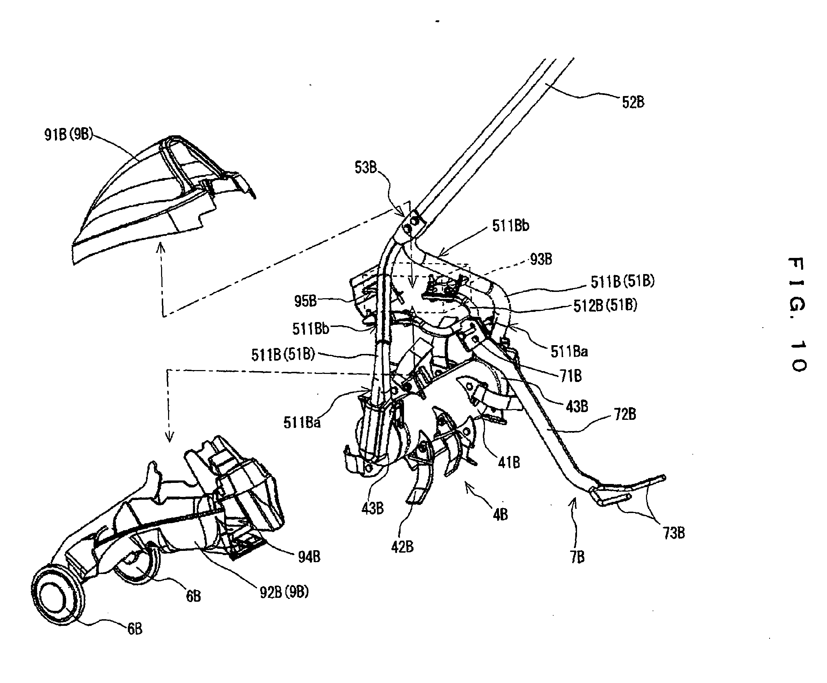

The battery case 9B is supported by the cultivating frame 51B and the handle frame 52B so as to surround a coupling section 53B (see Fig. 10 described later) where the cultivating frame 51B and the handle frame 52B are coupled with each other.

The cultivating machine 1B further includes a pair of left and right traveling wheels 6B positioned forward than the cultivating shaft unit 4B, a resistance rod 7B supported by the support frame 5B so as to be positioned rearward than the cultivating shaft unit 4B, and a handle unit 8B coupled with an upper end 52Ba of the handle frame 52B.
A coupling section where the handle frame 52B and the handle unit 8B are coupled with each other is covered with a handle coupling case 80B.

The respective components of the cultivating machine 1B are more specifically described below.
As shown in Figs. 6 and 7, the cultivating shaft unit 4B includes, in addition to the electric motor 3B, a cylindrical barrel portion 41B placed so that a rotational-axis line thereof is along with the width direction of the machine body and driven by the electric motor 3B around the rotational-axis line, cultivating claws 42B fixed to an outer peripheral surface of the cylindrical barrel portion 41B and rotated around the rotational-axis line together with the cylindrical barrel portion 41B so as to cultivate the ground, and a pair of left and right support portions 43B which are supported by the cultivating frame 51B so as to be positioned on both ends of the cylindrical barrel portion 41B and which support the cylindrical barrel portion 41B in a rotatable manner around the rotational-axis line.

The electric motor 3B is accommodated in an internal space formed by the cylindrical barrel portion 41B and the pair of left and right support portions 43B and supported by at least one of the pair of support portions 43B in a state capable of rotating the cylindrical barrel portion 41B.
In the internal space formed by the cylindrical barrel portion 41B and the pair of left and right support portions 43B, a reduction mechanism (not shown) capable of reducing rotational speed of a driving power outputted from the electric motor 3B is accommodated.

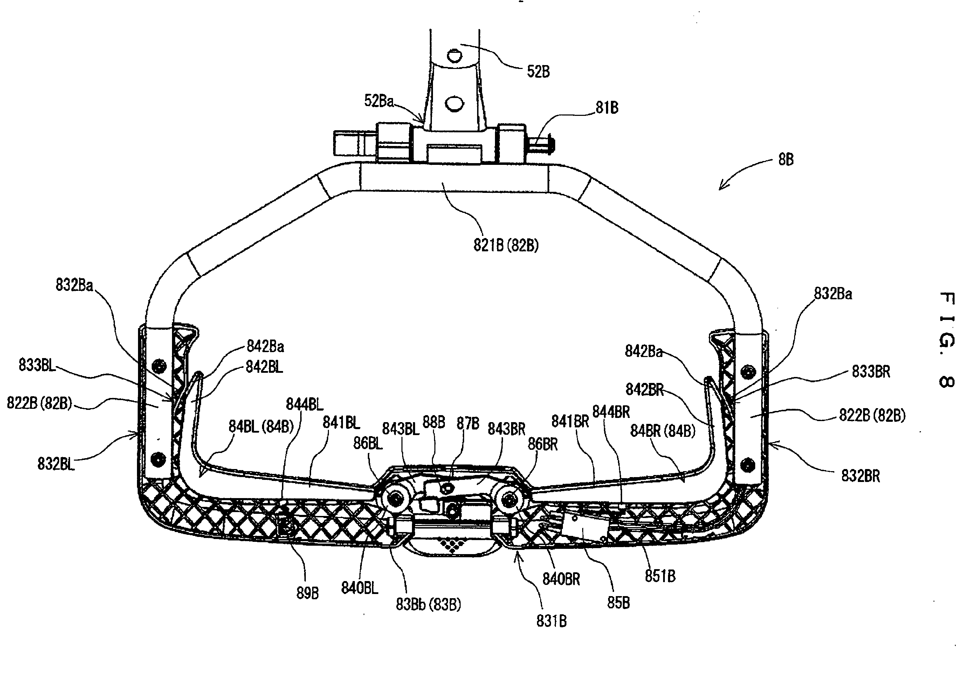

Fig. 8 shows an internal structure of the handle unit 8B in the cultivating machine 1B.
In the present embodiment, the handle unit 8B includes a support member 82B coupled with the upper end 52Ba of the handle frame 52B in a pivotable manner around a first pivotal shaft 81B along the width direction of the machine body, a grip portion 83B coupled with the support member 82B, and an operation lever 84B provided in the grip portion 83B, and a detecting device 85B which detects whether or not the operation lever 84B is manually operated.

More specifically, the support member 82B includes a widthwise support portion 821B coupled with the upper end 52Ba of the handle frame 52B in a pivotable manner around the first pivotal shaft 81B in a state of being along the width direction of the machine body, and a pair of lengthwise support portions 822B extending rearward in the machine body from both ends of the widthwise support portions 821B in the width direction of the machine body with the cultivating position as a reference.

The grip portion 83B connects between free ends of the pair of lengthwise support portions 822B.
In the present embodiment, the grip portion 83B is formed by an upper grip case 83Ba and a lower grip case 83Bb which are separable from each other in an up-and-down direction.

More specifically, the upper and lower grip cases 83Ba and 83Bb are coupled with each other with the free ends of the pair of lengthwise support portions 822B being sandwiched therebetween, which provides the grip portion 83B held by the operator.
Fig. 8 shows a state where the upper grip case 83Ba and the handle coupling case 80B are removed.

The grip portion 83B includes a pair of left lengthwise grip portion 832BL and right lengthwise grip portion 832BR which are coupled respectively to the pair of lengthwise support portions 822B, and a widthwise grip portion 831B which extends along the width direction of the machine body to connect between the left and right lengthwise grip portions 832BL and 832BR.

The operation lever 84B is supported by the grip portion 83B in a pivotable manner around an axial line along the up-and-down direction.
In the present embodiment, the operation lever 84B includes a pair of left lever 84BL and right lever 84BR which operate in conjunction with each other.

More specifically, in an inner surface of at least one of the upper and lower grip cases 83Ba and 83Bb, left and right pivotal shafts 86BL and 86BR substantially along the up-and-down direction are provided on a first side (left side) and a second side (right side) in the width direction of the machine body of a central region of the widthwise grip portion 831B in the width direction of the machine body.

The left lever 84BL is supported in a pivotable manner around the left pivotal shaft 86BL in a state where a part of the left lever 84BL is exposed out of the grip portion 83B formed by the upper and lower grip cases 83Ba and 83Bb.
More specifically, the left lever 84BL includes a left pivoting portion 840BL supported in a pivotable manner by the left pivotal shaft 86BL, and a left widthwise lever portion 841BL extending outward (leftward) in the width direction of the machine body from the left pivoting portion 840BL.

In a similar manner, the right lever 84BR is supported in a pivotable manner by the right pivotal shaft 86BR in a state where a part of the right lever 84BR is exposed out of the grip portion 83B formed by the upper and lower grip cases 83Ba and 83Bb.
More specifically, the right lever 84BR includes a right pivoting portion 840BR supported in a pivotable manner by the right pivotal shaft 86BR, and a right widthwise lever portion 841BR extending outward (rightward) in the width direction of the machine body from the right pivoting portion 840BR.

The left and right levers 84BL and 84BR are configured so as to move relative to the grip portion 83B in conjunction with each other.
More specifically, the left lever 84BL includes, in addition to the constitution described earlier, a left coupling section 843BL extending toward the center (rightward) in the width direction of the machine body from the left pivoting portion 840BL.

In a similar manner, the right lever 84BR includes, in addition to the constitution described earlier, a right coupling section 843BR extending toward the center (leftward) in the width direction of the machine body from the right pivoting portion 840BR.

The left coupling section 843BL and the right coupling section 843BR are coupled with each other by a concavo-convex engagement so that pivoting movement of one of the right and left levers 84BR and 84BL (for example, the left lever 84BL) around the corresponding pivotal shaft (the left pivotal shaft 86BL in the foregoing example) causes the other of the right and left levers 84BR and 84BL (the right lever 84BR in the foregoing example) to be pivoted around the corresponding pivotal shaft (the right pivotal shaft 86BR in the foregoing example).

In the present embodiment, the left coupling section 843BL is provided with an engagement convex portion 87B, while the right coupling section 843BR is provided with an engagement concave portion 88B (a slotted hole in the example shown in the drawing) in which the engagement convex portion 87B is engaged.

As described, in the preferred embodiment, the right and left widthwise lever portions 841BR and 841BL are respectively provided with the right and left coupling sections 843BR and 843BL which extend toward the center in the width direction of the machine body from the corresponding pivoting portions 840BR and 840BL, and are coupled to each other through a concavo-convex engagement in a state where the right and left coupling sections 843BR and 843BL are overlapped with each other in the up-and-down direction, so that the right and left widthwise lever portions 841BR and 841BL are operable in conjunction with each other. Accordingly, the right and left widthwise lever portions 841BR and 841BL can be reliably operated in conjunction with each other without the deterioration of the operability thereof.

The right and left levers 84BR and 84BL each includes a lengthwise lever portion extending in the lengthwise direction of the machine from an outer end of the corresponding widthwise lever portion in the width direction of the machine body.

More specifically, as shown in Fig. 8, the left lever 84BL includes a left lengthwise lever portion 842BL extending forward from an end portion of the outer side (left side) of the left widthwise lever portion 841BL in the width direction of the machine body so as to extend along the left lengthwise grip portion 832BL.

The left lengthwise lever portion 842BL as well as the left widthwise lever portion 841BL functions as an operating portion with which the operator operates the left lever 84BL.
That is, the left lever 84BL is configured so that the operator can operate either of the left widthwise lever portion 841BL or the left lengthwise lever portion 842BL.

In a similar manner, the right lever 84BR includes a right lengthwise lever portion 842BR extending forward from an end portion of the outer side (right side) of the right widthwise lever portion 841BR in the width direction of the machine body so as to extend along the right lengthwise grip portion 832BR.

The right lengthwise lever portion 842BR as well as the right widthwise lever portion 841BR functions as an operating portion with which the operator operates the right lever 84BR.
That is, the right lever 84BR is configured so that the operator can operate either of the right widthwise lever portion 841BR or the right lengthwise lever portion 842BR.

The operation of the left lever 84BL and the right lever 84BR by operating the left lengthwise lever portion 842BL and the right lengthwise lever portion 842BR will be described later.

The detecting device 85B is accommodated in the grip portion 83B so as to detect whether or not the operation lever 84B is manually operated.
In the present embodiment, the detecting device 85B is accommodated in an internal space of the widthwise grip portion 831B so as to detect a position of the right widthwise lever portion 841BR relative to the widthwise grip portion 831B (that is, a closing/separating motion of the right widthwise lever portion 841BR).

More specifically, when one of the right and left levers 84BR and 84BL is pivoted in a direction where it is inserted into the grip portion 83B around the corresponding pivotal shaft 86BR or 86BL (in other word, when the operator holds one of the right and left levers 84BR and 84BL together with the grip portion 83B), either one of the right and left levers 84BR and 84BL which serves as a member to be detected (the right lever 84BR in the present embodiment) abuts the detecting device 85B.
When the detecting device 85B detects that the operation lever 84B is manually operated, the controller that receives the detecting signal from the detecting device 85B drives the cultivating shaft unit 4B.

Preferably, the handle unit 8B further includes a pressing member 89B which pressing the right or left lever 84BR or 84BL toward a non-operation position (that is, a position where the corresponding right or left lever 84BR or 84BL is most exposed outward from the grip portion 83B).
The provision of the pressing member 89B makes it possible to effectively prevent a possible detection error by the detecting device 89B when the manual operation of the operation lever 84B is released.

In the present embodiment, as shown in Fig. 8, the pressing member 89B is provided between inner surfaces of the left widthwise lever portion 841BL and the widthwise grip portion 831B so as to press the left widthwise lever portion 841BL in a direction where it is exposed outward from the widthwise grip portion 831B.

As described earlier, the left lever 84BL and the right lever 84BR are coupled with each other via the engagement convex portion 87B and the engagement concave portion 88B so as to operate in conjunction with each other. That is, the left lever 84BL and the right lever 84BR are configured so that the pivoting motion of one of the levers around the corresponding pivotal shaft causes the other lever to be also pivoted around the corresponding pivotal shaft.

Therefore, the provision of the single pressing member 89B so as to act on one (the left widthwise lever portion 841BL in the left lever 84BL in the present embodiment) of the right and left levers 84BR and 84BL makes it possible to press both the right and left levers 84BR and 84BL toward the respective non-operation positions.

Further, the provision of the single detecting device 85B so as to detect the operation position of one (the right widthwise lever portion 841BR in the right lever 84BR in the present embodiment) of the right and left levers 84BR and 84BL makes it possible to detect whether or not either or both the lever is manually operated by the operator.

In the present embodiment, the right and left levers 84BR and 84BL are respectively provided with right and left protrusions 844BR and 844BL on rear-side surfaces of the right and left widthwise lever portions 841BR and 841BL.

The left protrusion 844BL serves as an engagement member with which a first end of the pressing member 89B is engaged.
More specifically, the pressing member 89B has the first end engaged with the left protrusion 844BL and a second end engaged with an inner surface of the grip portion 83B, so as to press the left lever 84BL around the left pivotal shaft 86BL outward from the grip portion 83B.

The right protrusion 844BR serves as a member to be detected by the detecting device 85B.
More specifically, the detecting device 85B includes a detecting portion 851B provided so as to face the right protrusion 844BR, and detects that the operation lever 84B is positioned at the operation position by a contact of the right protrusion 844BR with the detecting portion 851B.

As described above, in the handle unit 8B, the left and right levers 84BL and 84BR pivoting around the corresponding pivotal shafts 86BL and 86BR in conjunction with each other are provided, the pressing member 89B which presses one of the left and right levers 84BL and 84BR around the corresponding pivotal shaft 86BL or 86BR is provided on one side (left side in the present embodiment) in the width direction of the machine body, and the detecting device 85B which detects the pivoting motion of the other one of the left and right levers 84BL and 84BR around the corresponding pivotal shaft 86BL or 86BR is provided on the other side (right side in the present embodiment) in the grip portion in the width direction of the machine body, so that the internal space of the grip portion 83B can be effectively used.

The thus configured handle unit 8B is operated as follows.
When at least one of the left and right levers 84BL and 84BR is operated in a direction where it is inserted into the grip portion 83B (in other words, at least one of the left and right levers 84BL and 84BR is held together with the grip portion 83B), the left and right levers 84BL and 84BR are both pivoted around the corresponding pivotal shafts 86BL and 86BR in a direction where they are housed in the grip portion 83B, and the pivoting motion of the left or right lever 84BL or 84BR is detected by the detecting device 85B, based on which the cultivating shaft unit 4B is driven.

When the manual operation of the left or right lever 84BL or 84BR is released (more specifically, when the operation force is released in the state where the left or right lever 84BL or 84BR is held together with the grip portion 83B), the left and right levers 84BL and 84BR are pivoted around the corresponding pivotal shafts 86BL and 86BR in a direction where they are exposed out of the grip portion 83B by the pressing member 89B acting on one of the levers. Then, when the pivoting motion of the left or right lever 84BL or 84BR (in other words, the left lever 84BL or the right 84BR is at the non-operation position) is detected by the detecting device 85B, the drive of the cultivating shaft unit 4B is halted.

In the present embodiment, the left and right levers 84BL and 84BR respectively include the pivoting portions 840BL and 840BR supported in a pivotable manner by the left and right pivotal shafts 86BL and 86BR which are provided at the center of the grip portion 83B in the width direction of the machine body, and the left and right widthwise lever portions 841BL and 841BR extending outward in the width direction of the machine body from the pivoting portions 840BL and 840BR, as described above.

According to the constitution, operation strokes at the outer ends of the left and right widthwise lever portions 841BL and 841BR in the width direction of the machine body can be increased, which effectively prevents the detecting device 85B from erroneously detecting whether or not the operation lever 84B is manually operated.

Further, according to the configuration, the outer ends of the left and right widthwise lever portions 841BL and 841BR in the width direction of the machine body can be operated with a minimal operation force. As a result, fatigue possibly generated from a long-hour operation can be alleviated.

As described above, the left and right levers 84BL and 84BR respectively include the left lengthwise lever portion 842BL and the right lengthwise lever portion 842BR extending forward from the outer ends of the left and right widthwise lever portions 841BL and 841BR in the width direction of the machine body so as to be along the left lengthwise grip portion 832BL and the right lengthwise grip portion 832BR, thereby achieving one operation method in which the cultivating shaft unit 4B is driven by holding the left and right levers 84BL and 84BR together with the widthwise grip portion 831B of the handle unit 8B, and the other one operation method in which the cultivating shaft unit 4B is driven by holding the left and right levers 84BL and 84BR together with the left and right lengthwise grip portions 832BL and 832BR.

More specifically, the handle unit 8B is provided with a left guide structure 833BL so that the left lever 84BL is pivoted toward the operation position around the corresponding left pivotal shaft 86BL when the left lengthwise lever portion 842BL is pressed toward the corresponding lengthwise grip portion 832BL in the state where the left lever 84BL is at the non-operation position.

In a similar manner, the handle unit 8B is provided with a right guide structure 833BR so that the right lever 84BR is pivoted toward the operation position around the corresponding right pivotal shaft 86BR when the right lengthwise lever portion 842BR is pressed toward the corresponding lengthwise grip portion 832BR in the state where the right lever 84BR is at the non-operation position.

The left guide structure 833BL includes an engagement surface 842Ba provided on the outer side of the lengthwise lever portion 842BL in the width direction of the machine body, and a guide surface 832Ba provided in the lengthwise grip portion 832BL so as to face inward in the width direction of the machine body, wherein the engagement surface 842Ba and the guide surface 832Ba are configured to slidably contact with each other when the left lever 84BL is pivoted around the left pivotal shaft 86BL.

In the present embodiment, the guide surface 832Ba is inclined in such a manner as to be positioned inward in the width direction of the machine body as it advances forward.
The engagement surface is inclined in such a manner as to be positioned inward in the width direction of the machine body as it advances forward, thereby engaging with the guide surface when the left lever 84BL is pivoted around the left pivotal shaft 86BL.

Accordingly, when the left lengthwise lever portion 842BL is pressed toward the corresponding lengthwise grip portion 832BL in the state where the left lever 84BL is at the non-operation position, the engagement surface 842Ba is guided by the guide surface 832Ba so that the left lever 84BL is pivoted around the left pivotal shaft 86BL toward the operation position.

The right guide structure 833BR is symmetrical to the left guide structure 833BL with a virtual central surface, which extends vertically at the center in the width direction of the machine body, as a reference.

Next, a frame structure and a battery accommodating structure of the cultivating machine 1B according to the present embodiment are described.

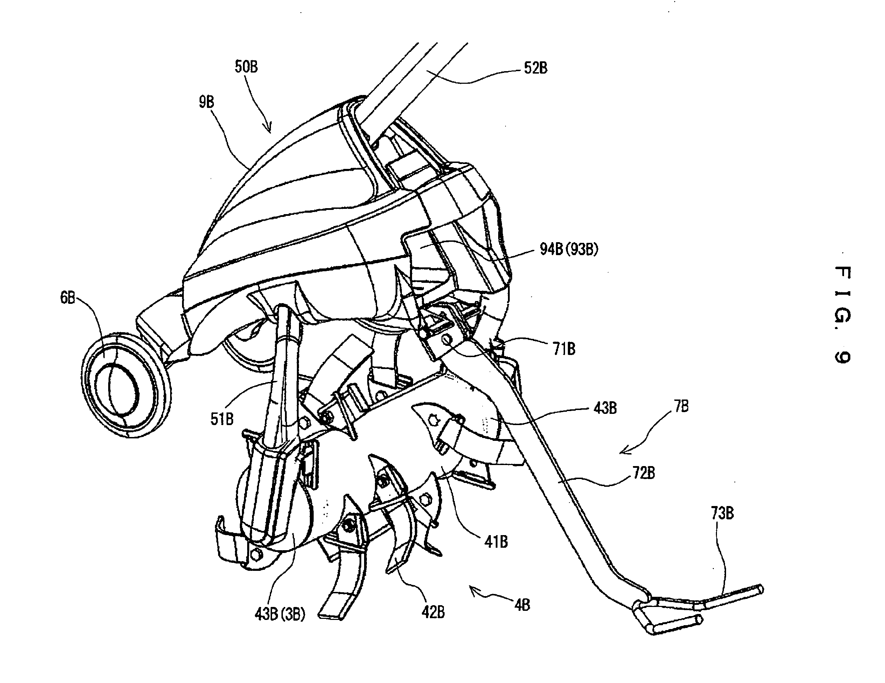

Fig. 9 is a rear perspective view of the cultivating machine 1B, and Fig. 10 is an exploded perspective view of the cultivating machine 1B.

As described earlier, the support frame 5B of the machine main body 50B includes the cultivating frame 51B which supports the cultivating shaft unit 4B, and the handle frame 52B inclined in the front-low/rear-high manner so as to be positioned rearward as it advances from the lower end toward the upper end with the cultivating position of the machine as a reference.

As shown in Fig. 10, the cultivating frame 51B includes a pair of left and right cultivating support pipes 511B having upper ends directly or indirectly coupled with each other in a state where lower ends thereof sandwich the both ends of the cultivating shaft unit 4B in the width direction of the machine body.

The handle frame 52B includes a lower end coupled with an upper end of the cultivating frame 51B at the center in the width direction of the machine body.
In the present embodiment, the pair of left and right cultivating support pipes 511B and the handle frame 52B are fastened via a fastening member such as bolts in the state where the upper ends of the pair of left and right cultivating support pipes 511B sandwich the lower end of the handle frame 52B therebetween, so that the handle frame 52B is coupled with the cultivating frame 51B.

The pair of left and right cultivating support pipes 511B respectively include parallel portions 511Ba extending substantially in parallel with each other and upward from the lower ends which support the cultivating shaft unit 4B, and inclined portions 511Bb extending forward and upward, and inward in the width direction of the machine body from the upper ends of the parallel portions 511Ba.

The cultivating frame 5B further includes a reinforcing pipe 512B that couples between the pair of left and right cultivating support pipes 511B.
More specifically, the reinforcing pipe 512B couples between the inclined portions 511Bb of the pair of left and right cultivating support pipes 511B.

In the present embodiment, the reinforcing pipe 512B has such a shape that a central portion thereof in the width direction of the machine body is positioned rearward than both ends thereof.

As described above, the battery case 9B is supported by the cultivating frame 51B and the handle frame 52B so as to surround the coupling section 53B where the tiling frame 51B and the handle frame 52B are coupled with each other as shown in Figs. 9 and 10.

More specifically, the battery case 9B includes a battery accommodating portion 93B in which the battery 2B is housed. As shown in Figs. 6, 9 and 10, the battery accommodating portion 93B is configured such that the battery 2B housed in the battery accommodating portion 93B overlaps with the cultivating shaft unit 4B as viewed from the above in the state where the cultivating machine is in the cultivating position in which the cultivating shaft unit 4B is brought into contact with the ground and the traveling wheels 6B are positioned upward from the ground.

As described earlier, in the cultivating machine 1B according to the present embodiment, the battery case 9B with battery accommodating portion 93B in which the battery 2B is housed is supported by the support frame 5B so as to surround the coupling section 53B where the upper end of the cultivating frame 51B and the lower end of the handle frame 52B are coupled with each other.

Further, the battery accommodating portion 93B of the battery case 9B houses therein the battery 2B so that the battery 2B overlaps with the cultivating shaft unit 4B as viewed from the above with the cultivating position of the cultivating machine 1B as a reference.

According to the cultivating machine 1B thus constituted, a weight of the battery 2B, which is a heavy component, directly acts on the cultivating shaft unit 4B in the a state where the machine is in the cultivating position, thereby effectively placing the center of gravity of the cultivating machine 1B in the cultivating position on the cultivating shaft unit 4B. Therefore, the load can be smoothly applied to the cultivating shaft unit 4B, thereby enhancing workability of the cultivating operation while reducing the operator's labor.

In the present embodiment, the battery accommodating portion 93B includes an opening 94B opened rearward.
That is, the battery 2B can be inserted in and removed from the battery accommodating portion 93B from the rearward of the machine via the opening 94B as shown in Fig. 6.

Thus, the cultivating machine 1B according to the present embodiment is configured such that the battery 2B can be inserted into the battery accommodating portion 93B from the rearward of the machine via the opening 94B provided on the rear side of the battery accommodating portion 93B.

According to the configuration, the battery 2B can be speedily and easily exchanged during the cultivating operation because the opening 94B is placed close to the operator positioned in the rearward of the cultivating machine 1B.

In the present embodiment, when the battery 2B is slid into the battery accommodating portion 93B via the opening 94B from the rearward of the machine, a power supply output 21B (see Fig. 6) at the distal end of the battery 2B is electrically connected to the electric motor 3B via a power supply input 95B (see Fig. 10) provided in the battery case 9B.

Further, in the cultivating machine 1B according to the present embodiment, the battery accommodating portion 93B has such a size that a rear end of the battery 2B protrudes rearward from the battery case 9B (that is, at least the rear end of the battery 2B is exposed out of the opening 94B of the battery case 9B) in a state where the battery 2B is mounted as shown in Fig. 6.
According to the configuration, the operator can easily confirm whether or not the battery 2B is mounted, which diminishes the operator's labor.

In the present embodiment, the battery case 9B includes an upper battery case 91B and a lower battery case 92B coupled with each other in a separable manner as shown in Fig. 10.
More specifically, the upper battery case 91B and the lower battery case 92B, which are vertically coupled with each other so as to surround the coupling section 53B, are supported by the tiling frame 51B and the handle frame 52B.
The battery accommodating portion 93B is formed in the lower battery case 92B.

In the present embodiment, the battery case 9B is configured such that the battery accommodating portion 93B extends in the lengthwise direction of the machine with passing through a space surrounded by the pair of left and right cultivating support pipes 511B, the reinforcing pipe 512B and the handle frame 52B, as shown in Fig. 10.

That is, the battery case 9B accommodates the battery 2B in such am manner that the handle frame 52B is positioned above the battery 2B, the pair of let and right cultivating support pipes 511B are respectively positioned on the both sides of the battery 2B, and the reinforcing pipe 512B coupling between the pair of let and right cultivating support pipes 511B is positioned below the battery 2B. According to the configuration, it is possible to effectively protect the battery 2B from any impact from the outside, while positioning the battery 2B so as to overlap with the cultivating shaft unit 4B as viewed from the above (or in a plan view) in a state where the machine is in the cultivating position.

In the present embodiment, the traveling wheels 6B are provided so as to be positioned forward and downward than the battery accommodating portion 93B with the cultivating position of the cultivating machine 1B as a reference. Specifically, the traveling wheels 6B are supported by the battery case 9B (more specifically, by the lower battery case 92B).

The cultivating machine 1B according to the present embodiment is provided with two wheels which are rotatable independently from each other as the traveling wheels 6B, however, the present invention is not limited thereto. For example, a pair of traveling wheels coupled with each other by an axle shaft provided therebetween, or a single wheel provided at the center in the width direction of the machine body may be used as the traveling wheels 6B.

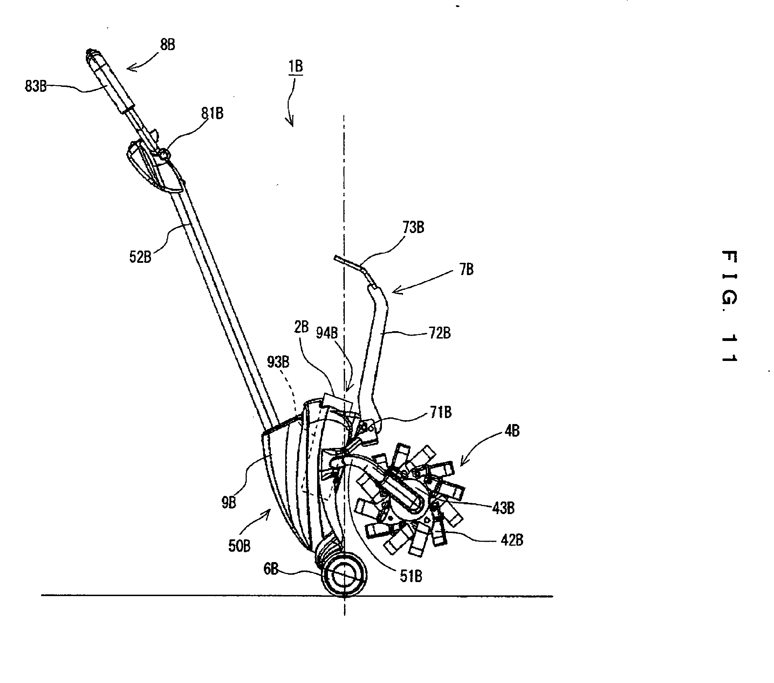

Fig. 11 is a left side view of the cultivating machine 1B in the moving position (a position wherein the traveling wheels 6B are brought into contact with the ground, and the cultivating shaft unit 4B is lifted upward from the ground).

The cultivating machine 1B according to the present embodiment is configured so that the traveling wheels 6B are positioned forward and upward than the cultivating shaft unit 4B with the cultivating position as a reference, as described earlier.
The thus configured cultivating machine 1B could take the moving position (see Fig. 11) in which the traveling wheels 6B are brought into contact with the ground and the cultivating shaft unit 4B is lifted up from the ground by pivoting the handle frame 52B, which is inclined in such the front-low/rear-high manner that is positioned rearward as it advances upward in a state where the machine 1B is in the cultivating position (Fig. 6), in a direction where the upper side of the handle frame 52B is shifted forward so that the handle frame 52B is inclined in such a front-high/rear-low manner that is positioned forward as it advances upward.

In the present embodiment, by pivoting the handle frame 52B in a direction where the upper side thereof is shifted via the grip portion 83B provided in the upper end of the handle frame 52B, the walking type electric cultivating machine 1B is shifted from the cultivating position to the moving position capable of being moved on the road with the traveling wheels 6B.

The handle frame 52B, traveling wheels 6B and cultivating shaft unit 4B are preferably configured so that the height from the ground of the handle unit 8B provided in the upper end of the handle frame 52B in the moving position is substantially the same as that in the cultivating position, as shown in Figs. 6 and 11.
The configuration makes it possible to reduce a change of the operator's posture between the two positions of the machine 1B, which alleviates the operator's labor.

According to the cultivating machine 1B, it is possible to easily perform a change-over between the cultivating position and the moving position in comparison to a cultivating machine in which the traveling wheels and the resistance rod have to be selectively mounted in performing the change-over between the two positions and a cultivating machine in which a member having first and second ends respectively supporting the traveling wheels and the resistance rod has to be position-changed in the change-over between the two positions, since the traveling wheels 6B is constantly provided in a position-fixed manner as described above.

Further, since the traveling wheels 6B are positioned forward and upward than the cultivating shaft unit 4B with the cultivating position of the machine 1B as a reference, the cultivating machine 1B could prevent the traveling wheels 6B from interfering with the cultivating operation while having a simple structure. Further, according to the thus configured cultivating machine 1B, it is possible that the height of the grip portion 83B in the moving position is close to that in the cultivating position in comparison to a cultivating machine in which the traveling wheels are positioned rearward and upward than the cultivating shaft unit. As a result, the operator need not bend over when moving the machine 1B on the road or the like with the traveling wheels 6B, which alleviates the operator's burden when moving the machine 1B.

Further, in the cultivating machine 1B according to the present embodiment, the battery accommodating portion 93B, the traveling wheels 6B and cultivating shaft unit 4B are arranged so that the battery 2B accommodated in the battery accommodating portion 93B overlaps with the rotational-axis line of the traveling wheels 6 as viewed from the above with the moving position of the cultivating machine as a reference.

According to the configuration, when the cultivating machine 1B is pivoted forward via the handle unit 8B so as to be shifted from the cultivating position to the moving position, the weight of the battery 2B can smoothly act on the traveling wheels 6B. More specifically, the configuration makes it possible that the center of gravity of the heavy battery 2B is easily placed on the traveling wheels 6B at the time when the cultivating machine 1B is in the moving position, which alleviates the operator's burden in the moving position.

The resistance rod 7B is provided so as to be positioned rearward than the cultivating shaft unit 4B at the center in the width direction of the machine body.
In the present embodiment, the resistance rod 7B is coupled with the reinforcing pipe 512B.

The resistance rod 7B includes a flat plate portion 72B, and a pair of left and right branched portions 73B branched from a lower end of the flat plate portion 72B.

The flat plate portion 72B has an upper end coupled with a central region of the reinforcing pipe 512B in a pivotable manner around a second pivotal shaft 71B along the width direction of the machine body in a state where surfaces of the plate portion face in the width direction of the machine.

In the present embodiment, the pair of left and right branched portions 73B are symmetrical to each other with the center in the width direction of the cultivating machine 1B as a reference.
In the present embodiment, the pair of left and right branched portions 73B have a bar shape, however, the present invention is not limited thereto. For example, the pair of left and right branched portions 73B may have a plate shape.

As described earlier, the upper end of the flat plate 72B in the resistance rod 7B is coupled with the reinforcing pipe 512B of the cultivating frame 51B.
According to the thus configuration in which the resistance rod 7B is coupled with the cultivating frame 51B via the reinforcing pipe 512B, a sufficient strength can be retained even when any resistance is applied to the resistance rod 7B in the ground.

As described earlier, the resistance rod 7B is pivotable around the second pivotal shaft 71B.
Specifically, the resistance rod 7B is configured so as to take following two positions around the second pivot shaft 71B: a working position in which its lower end is brought into contact with the ground and a first storage position in which its lower end is positioned upward from the ground on a rear side of the handle frame 52B with the cultivating position of the cultivating machine 1B as a reference.

More specifically, the resistance rod 7B is configured so that the lower end (the branched portions 73B) is inserted into the ground in the working position with the cultivating position of the cultivating machine 1B as a reference, and the flat plate portion 72B is substantially in parallel with the handle frame 52B on a rear-surface side 52Bb of the handle frame 52B in the first storage position.
According to the configuration, it is possible to compact the cultivating machine 1B in the moving position while preventing the resistance rod 7B from interfering with external matters when moving the cultivating machine.

Here, positions (storage positions), which the cultivating machine 1B according to the present embodiment can take when it is stored, will be explained.

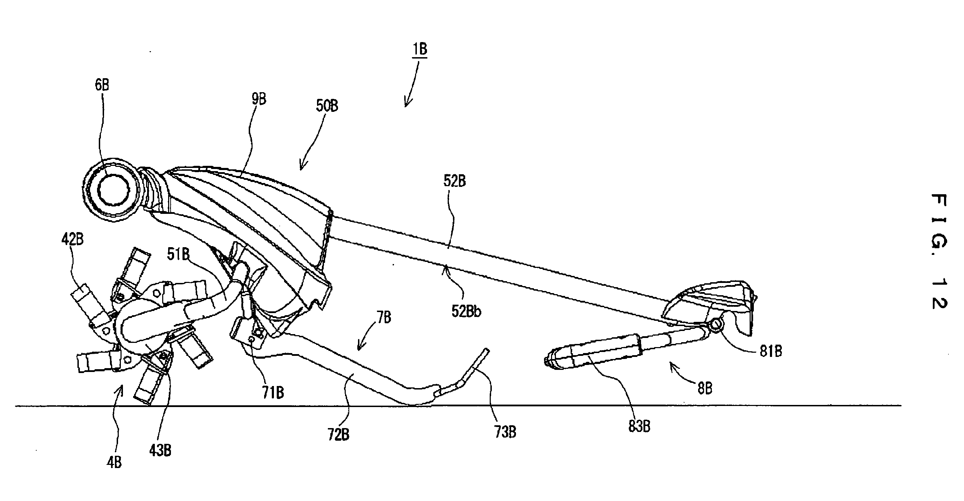

Fig. 12 is a left side view of the cultivating machine 1B in a first storage position.

The handle unit 8B is configured so as to take an operation position shown in Fig. 6 and a storage position that is pivoted around the first pivotal shaft 81B from the operation position to such to be close to the rear-surface side 52Bb of the handle frame 52B.

That is, the handle unit 8B is configured so that the grip portion 83B is positioned rearward and upward than the upper end of the handle frame 52B in the operation position with the cultivating position of the cultivating machine 1B as a reference, and the grip portion 83B is close to the rear-surface side 52Bb of the handle frame 52B in the storage position.

The resistance rod 7B, as described earlier, is configured so as to take the working position in which the lower end thereof (the branched portions 73B) is inserted into the ground with the cultivating position of the cultivating machine 1B as a reference, and the first storage position that is pivoted around the second pivotal shaft 71B from the working position so as to be close to the rear-surface side 52Bb of the handle frame 52B until the flat plate portion 52B is substantially in parallel with the handle frame 52B on the rear side of the handle frame 52B.

In the present embodiment, the resistance rod 7B is configured such that the flat plate portion 72B is substantially in orthogonal to the handle frame 52B as viewed from the side (or in a side view) when the resistance rod 7B is in the working position (see Fig. 6), and the flat plate portion 72B is substantially in parallel with the handle frame 52B when the resistance rod 7B is in the first storage position.

The cultivating machine 1B preferably includes a retaining structure (for example, a detent structure, lock mechanism or the like) for retaining the handle unit 8B and the resistance rod 7B in the respective positions.

As described above, the cultivating machine 1B according to the present embodiment is configured to take the first storage position in which the handle unit 8B coupled with the upper end of the handle frame 52B is pivoted around the first pivotal shaft 81B so that the handle unit 8B is at the storage position which is close to the rear-surface side 52Bb of the handle frame 52B, and the resistance rod 7B coupled with the reinforcing pipe 512B is pivoted around the second pivotal shaft 71B so that the resistance rod 7B is at the first storage position which is close to the rear-surface side 52Bb of the handle frame 52B, thereby downsizing the whole of the cultivating machine 1B including the handle unit 8B and the resistance rod 7 as much as possible.

Further, as shown in Fig. 12, the cultivating machine 1B is configured so that the cultivating shaft unit 4B and the resistance rod 7B are brought into contact with the ground while positioning the handle unit 8B upward from the ground in a state where the machine 1B is laid down so that the rear-surface side 52Bb of the handle frame 52B faces downward in the first storage position in which the handle unit 8B and the resistance rod 7B are respectively in the storage position and the first storage position.
Accordingly, it is possible to store the cultivating machine 1B in the laid-down state while preventing the handle unit 8B to be held by the operator from getting grubby by a contact with the ground.

Further, the cultivating machine 1B is configured so that the battery case 9B is positioned upward from the ground in the state of being laid down so that the rear-surface side 52Bb of the handle frame 52B faces downward in the first storage position, as shown in Fig. 12. Accordingly, it is possible to store the cultivating machine 1B in the laid-down while preventing the battery case 9B from getting grubby by a contact with the ground and also preventing the battery case 9B from receiving an impact when the cultivating machine 1B is laid down.

The cultivating machine 1B according to the present embodiment is configured so that the traveling wheels 6B are provided forward than the cultivating shaft unit 4B so as to be positioned on a line extended from the handle frame 52B, as shown in Fig. 12.
According to the configuration, it is possible to prevent the traveling wheels 6B from protruding upward from the plane on which the handle frame 52B is placed in the state where the cultivating machine 1B is laid down, thereby downsizing the cultivating machine 1B in the laid-down state as much as possible.

The cultivating machine 1B according to the present embodiment is configured so as to take a second storage position in addition to the first storage position.

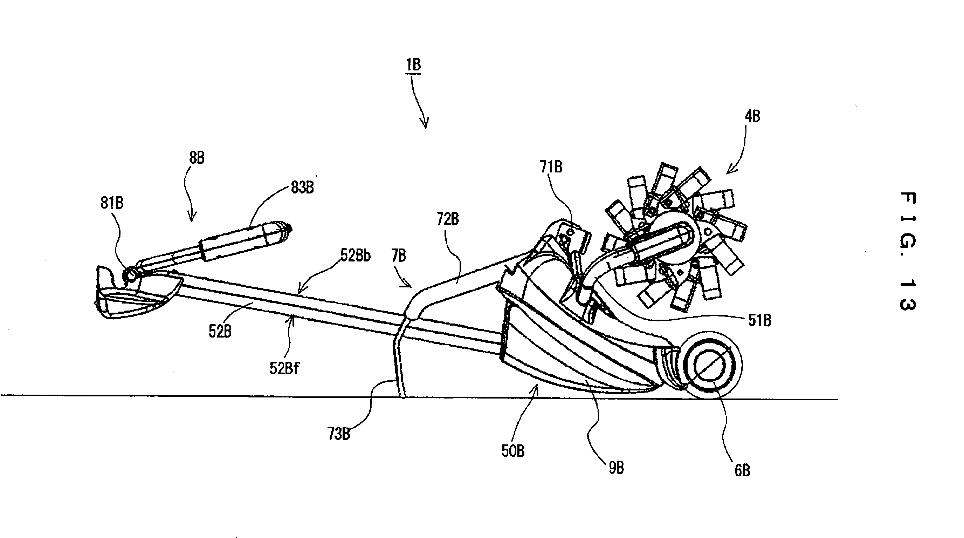

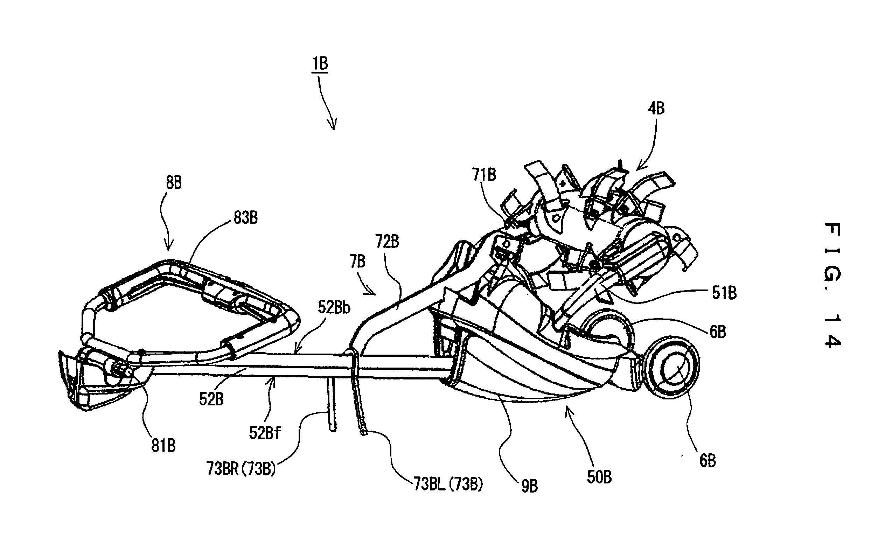

Figs. 13 and 14 are a left side view and a left perspective view of the cultivating machine 1B in the second storage position.

As shown in Figs. 13 and 14, the resistance rod 7B is configured so as to take a second storage position in addition to the working position and the first storage position.
Specifically, the resistance rod 7B is configured such that free ends of the pair of branched portions 73B are across the handle frame 52B so as to be positioned forward than the handle frame 52B in the second storage position.

That is, the resistance rod 7B takes the first storage position by being rotated around the second pivotal shaft 71B from the working position in such a direction that the flat plate portion 72B comes close to the handle frame 52B, and also takes the second storage position by being rotated around the second pivotal shaft 71B from the first storage position so that the flat plate portion 72B comes further close to the handle frame 52B. The resistance rod 7B is configured so that the free ends of the pair of branched portions 73B are across the handle frame 52B so as to be positioned forward than the handle frame 52B at the second storage position.

The pair of branched portions 73B of the resistance rod 7B respectively serve as first and second grounding portions 73BL and 73BR that are distant from each other in the width direction of the machine body, at the time when the cultivating machine 1B is laid down so that a front-surface side 52Bf of the handle frame 52B faces downward in the second storage position in which the handle unit 8B and the resistance rod 7B are positioned respectively at the storage position and the second storage position.

More specifically, the cultivating machine 1B is configured so that the traveling wheels 6B and the resistance rod 7B are brought into contact with the ground while positioning the handle unit 8B (the handle coupling section 80B) upward from the ground when the cultivating machine 1B is laid down so that the front-surface side 52Bf of the handle frame 52B faces downward in the second storage position in which the handle unit 8B and the resistance rod 7B are positioned respectively at the storage position and the second storage position.
Accordingly, it is possible to store the cultivating machine 1B in the laid-down state so that the front-surface side 52Bf of the handle frame 52B faces downward while preventing the handle unit 8B to be held by the operator from getting grubby by a contact with the ground.

Further, according to the constitution, when the cultivating machine 1B in the second storage position is laid down so that the front-surface side 52Bf of the handle frame 52B faces downward, the battery case 9B is positioned upward from the ground.
Therefore, it is possible to store the cultivating machine 1B in the laid-down state so that the front-surface side 52Bf of the handle frame 52B faces downward, while preventing the battery case 9B from getting grubby by a contact with the ground and also preventing the battery case 9B from receiving an impact when the cultivating machine 1B is laid down.

The preferred embodiments of the walking type electric cultivating machine according to the present invention have been thus far described. However, the present invention is not limited to the preferred embodiments, and can be improved, modified and corrected within the scope of the appended claims.

## Claims

1. A walking type electric cultivating machine (1, 1B) comprising a machine main body (50, 50B) that includes a support frame (5, 5B) and a battery case (9, 9B) for accommodating a battery (2, 2B), an electrically-operated cultivating shaft unit (4, 4B) that is supported by the machine main body so as to be positioned downward than the machine main body and includes an electric motor (3B) mounted therein and driven by the battery, a resistance rod (7, 7B) supported by the support frame so as to be positioned rearward than the cultivating shaft unit,
**characterized in that**,
traveling wheels (6, 6B) are supported by the machine main body so as to be positioned forward than the cultivating shaft unit, wherein
the support frame has a cultivating frame (51B) that includes a pair of left and right cultivating support pipes (511B) having upper ends directly or indirectly coupled with each other and lower ends sandwiching both ends of the cultivating shaft unit in a width direction of the machine, and a handle frame (52B) having a lower end coupled with an upper end of the cultivating frame at the center in the width direction of the machine and an upper end to which a handle unit (8B) is attached, the handle frame being inclined in such a front-low/rear-high manner so as to be positioned rearward as it advances from the lower end toward the upper, in a state where the cultivating machine is in a cultivating position in which the cultivating shaft unit is brought into contact with the ground while the traveling wheels being lifted upward from the ground,
the battery case is supported by the cultivating frame and the handle frame so as to surround a coupling section (53B) where the cultivating frame and the handle frame are coupled with each, and is provided with a battery accommodating portion (93B) in which the battery is accommodated in such a manner that the battery overlaps with the cultivating shaft unit as viewed from the above in a state where the cultivating machine is in the cultivating position,
the battery accommodating portion has an opening (94B) that is opened rearward so that the battery can be inserted in and removed from the battery accommodating portion from the rearward of the cultivating machine,
when the handle frame, in a state where the cultivating machine is in the cultivating position, is pivoted around a cultivating shaft (40) of the cultivating shaft unit (4, 4B) so that the handle frame (52) is inclined in such a front-high/rear-low manner so as to be positioned forward as it advances from the lower end toward the upper end, the cultivating machine is shifted from the cultivating position to a moving position where the traveling wheels (6, 6B) are brought into contact with the ground while the cultivating shaft (40) unit is lifted upward from the ground, and
the battery accommodating portion, the traveling wheels and the cultivating shaft unit are arranged so that the battery accommodated in the battery accommodating portion overlaps with a rotational-axis line of the traveling wheels as viewed from the above, in a state where the cultivating machine is in the moving position.

2. The walking type electric cultivating machine (1B) according to claim 1, wherein
the pair of left and right cultivating support pipes include parallel portions (511Ba) extending upward from lower ends which support the cultivating shaft unit so as to be substantially in parallel with each other, and inclined portions (511Bb) extending forward and inward in the width direction of the cultivating machine from upper ends of the parallel portions and having upper ends directly or indirectly coupled to each other,
the cultivating frame further includes a reinforcing pipe (512B) that couples between the pair of left and right cultivating support pipes, and
the battery accommodating portion extends in the lengthwise direction of the cultivating machine with passing through a space surrounded by the pair of left and right cultivating support pipes, the reinforcing pipe and the handle frame.

3. The walking type electric cultivating machine (1B) according to claim 2, wherein the resistance rod (7B) is connected to the reinforcing pipe.

## Patentansprüche

1. Elektrisches Lauf-Bodenbearbeitungsgerät (1, 1B), das Folgendes umfasst:
einen Maschinen-Hauptkorpus (50, 50B), der einen Stützrahmen (5, 5B) und ein Batteriefach (9, 9B) zum Aufnehmen einer Batterie (2, 2B) enthält; eine elektrisch betriebene Bodenbearbeitungswelleneinheit (4, 413), die so durch den Maschinen-Hauptkorpus gestützt wird, dass sie unterhalb des Maschinen-Hauptkorpus angeordnet ist, und einen Elektromotor (3B) enthält, der darin montiert ist und durch die Batterie angetrieben wird; und einen Widerstandsbügel (7, 7B), der so durch den Stützrahmen gestützt wird, dass er hinter der Bodenbearbeitungswelleneinheit angeordnet ist,
**dadurch gekennzeichnet, dass** Räder (6, 6B) durch den Maschinen-Hauptkorpus so gestützt werden, dass sie vor der Bodenbearbeitungswelleneinheit angeordnet sind, wobei
der Stützrahmen einen Bodenbearbeitungsrahmen (51B) aufweist, der ein Paar linker und rechter Bodenbearbeitungsstützrohre (511B) enthält, die obere Enden aufweisen, die direkt oder indirekt miteinander gekoppelt sind, und untere Enden aufweisen, die beide Enden der Bodenbearbeitungswelleneinheit in einer Breitenrichtung der Maschine zwischen sich aufnehmen; und einen Griffrahmen (52B) aufweist, der ein unteres Ende aufweist, das in der Mitte in der Breitenrichtung der Maschine mit einem oberen Ende des Bodenbearbeitungsrahmens gekoppelt ist, und ein oberes Ende aufweist, an dem eine Griffeinheit (8B) befestigt ist, wobei der Griffrahmen so nach vorn abwärts geneigt ist, dass er sich, von seinem unteren Ende zu seinem oberen Ende ansteigend,
in einer hinteren Stellung befindet, wenn sich das Bodenbearbeitungsgerät in einer Bodenbearbeitungsposition befindet, in der die Bodenbearbeitungswelleneinheit in Kontakt mit dem Boden steht, während die Räder vom Boden abgehoben sind,
das Batteriefach durch den Bodenbearbeitungsrahmen und den Griffrahmen so gestützt wird, dass es einen Kopplungsabschnitt (53B) umgibt, wo der Bodenbearbeitungsrahmen und der Griffrahmen miteinander gekoppelt sind, und
mit einem Batterieaufnahmeabschnitt (93B) versehen ist, in dem die Batterie so aufgenommen ist, dass die Batterie in der Draufsicht die Bodenbearbeitungswelleneinheit überlappt, wenn sich das Bodenbearbeitungsgerät in der Bodenbearbeitungsposition befindet,
der Batterieaufnahmeabschnitt eine Öffnung (94B) aufweist, die so nach hinten öffnet, dass die Batterie von der Rückseite des Bodenbearbeitungsgerätes aus in den Batterieaufnahmeabschnitt hineingeschoben und aus dem Batterieaufnahmeabschnitt herausgezogen werden kann,
wenn der Griffrahmen in einem Zustand, wo sich das Bodenbearbeitungsgerät in der Bodenbearbeitungsposition befindet, um eine Bodenbearbeitungswelle (40) der Bodenbearbeitungswelleneinheit (4, 4B) herum so geschwenkt wird, dass der Griffrahmen (52) so nach hinten abwärts geneigt ist, dass er sich, von seinem unteren Ende zu seinem oberen Ende ansteigend, in einer vorderen Stellung befindet, das Bodenbearbeitungsgerät aus der Bodenbearbeitungsposition in eine Bewegungsposition bewegt wird, in der Räder (6, 6B) mit dem Boden in Kontakt gebracht werden, während die Bodenbearbeitungswelleneinheit (40) vom Boden abgehoben ist, und
der Batterieaufnahmeabschnitt, die Räder und die Bodenbearbeitungswelleneinheit so angeordnet sind, dass die in dem Batterieaufnahmeabschnitt untergebrachte Batterie in der Draufsicht eine Rotationsachse der Räder überlappt, wenn sich das Bodenbearbeitungsgerät in der Bewegungsposition befindet.

2. Elektrisches Lauf-Bodenbearbeitungsgerät (1B) nach Anspruch 1,
wobei das Paar linker und rechter Bodenbearbeitungsstützrohre parallele Abschnitte (511Ba) enthält, die sich von unteren Enden, die die Bodenbearbeitungswelleneinheit stützen, so aufwärts erstrecken, dass sie im Wesentlichen parallel zueinander verlaufen, und geneigte Abschnitte (511Bb) enthält, die sich in der Breitenrichtung des Bodenbearbeitungsgerätes von oberen Enden der parallelen Abschnitte nach vorn und nach innen erstrecken und obere Enden aufweisen, die direkt oder indirekt miteinander gekoppelt sind,
der Bodenbearbeitungsrahmen des Weiteren ein Verstärkungsrohr (512B) enthält, das zwischen dem Paar linker und rechter Bodenbearbeitungsstützrohre gekoppelt ist, und
der Batterieaufnahmeabschnitt sich in der Längsrichtung des Bodenbearbeitungsgerätes erstreckt und dabei durch einen Raum hindurch verläuft, der von dem Paar linker und rechter Bodenbearbeitungsstützrohre, dem Verstärkungsrohr und dem Griffrahmen umgeben ist.

3. Elektrisches Lauf-Bodenbearbeitungsgerät (1B) nach Anspruch 2, wobei der Widerstandsbügel (7B) mit dem Verstärkungsrohr verbunden ist.

## Revendications

1. Cultivateur électrique à conducteur accompagnant (1, 1B) comprenant un corps de principal du cultivateur (50, 50B) qui contient un cadre support (5, 5B) et un boîtier pour batterie (9, 913) destiné à loger une batterie (2, 2B), une unité d'arbre du cultivateur commandée électriquement (4, 413) qui est supportée par le corps principal du cultivateur de manière à être positionnée plus bas que le corps principal du cultivateur et contient un moteur électrique (3B) y étant monté et entraîné par la batterie, une tige de résistance (7, 7B) supportée par le cadre support de manière à être positionnée plus en arrière que l'unité d'arbre du cultivateur,
**caractérisé par le fait que** des roues de déplacement (6, 6B) sont supportées par le corps principal du cultivateur de manière à être positionnées plus en avant que l'unité d'arbre du cultivateur, dans lequel :
le cadre support a un cadre cultivateur (51B) qui contient un paire de conduites droite et gauche de support du cultivateur (511B) ayant des extrémités supérieures couplées directement ou indirectement entre elles et des extrémités inférieures coinçant les deux extrémités de l'unité d'arbre du cultivateur dans un sens de la largeur du cultivateur, et un cadre poignée (52B) ayant une extrémité inférieure couplée à une extrémité supérieure du cadre cultivateur au centre dans le sens de la largeur du cultivateur et une extrémité supérieure à laquelle une unité de poignée (8B) est fixée, le cadre poignée étant incliné de manière avant-bas/arrière-haut de façon à être positionné vers l'arrière quand il avance de l'extrémité inférieure vers l'extrémité supérieure, dans un état où le cultivateur est dans un position de culture dans laquelle l'unité d'arbre du cultivateur est amenée en contact avec le sol tandis que les roues de déplacement sont relevées du sol,
le boîtier de batterie est supporté par le cadre cultivateur et le cadre poignée de manière à entourer une section de couplage (53B) où le cadre cultivateur et le cadre poignée sont couplés entre eux, et est pourvu d'une partie hébergeant la batterie (93B) dans laquelle la batterie est logée de telle manière que la batterie chevauche, vue du dessus, l'unité d'arbre du cultivateur dans un état où le cultivateur est dans la position de culture,
la partie hébergeant la batterie a une ouverture (94B) qui est ouverte vers l'arrière de telle sorte que la batterie puisse être insérée dans et retirée de la partie hébergeant la batterie depuis l'arrière du cultivateur,
quand le cadre poignée, dans un état où le cultivateur est en position de culture, est pivoté autour d'un arbre de culture (40) de l'unité d'arbre du cultivateur (4, 4B) de telle sorte que le cadre poignée (52) est incliné de manière avant-haut/arrière-bas de façon à être positionné vers l'avant quand il avance de l'extrémité inférieure vers l'extrémité supérieure, le cultivateur est déplacé de la position de culture à une position de déplacement où les roues de déplacement (6, 6B) sont amenées en contact avec le sol tandis que l'unité d'arbre du cultivateur (40) est relevée du sol, et
la partie hébergeant la batterie, les roues de déplacement et l'unité d'arbre du cultivateur sont disposées de telle sorte que la batterie hébergée dans la partie hébergeant la batterie chevauche une ligne d'axe rotationnel des roues de déplacement dans une vue du dessus, dans un état où le cultivateur est dans la position de déplacement.

2. Cultivateur électrique à conducteur accompagnant (1B) selon la revendication 1, dans lequel :
la paire de conduites de support du cultivateur droite et gauche contient des parties parallèles (511Ba) s'étendant vers le haut depuis les extrémités inférieures qui supportent l'unité d'arbre du cultivateur de manière à être sensiblement parallèles entre elles, et des parties inclinées (511Bb) s'étendant vers l'avant et l'intérieur dans le sens de la largeur du cultivateur depuis les extrémités supérieures des parties parallèles et ayant des extrémités supérieures couplées directement ou indirectement entre elles,
le cadre cultivateur contient en outre une conduite de renfort (512B) qui couple la paire des conduites droite et gauche de support du cultivateur, et la partie hébergeant la batterie s'étend dans le sens de la longueur du cultivateur en passant à travers un espace entouré par la paire de conduites de support du cultivateur, la conduite de renfort et le cadre poignée.

3. Cultivateur électrique à conducteur accompagnant (1B) selon la revendication 2, dans lequel la tige de résistance (7B) est reliée à la conduite de renfort.
